# EUROPÄISCHE PATENTSCHRIFT

(11) **EP 0 499 025 B1**
(45) Veröffentlichungstag und Bekanntmachung des Hinweises auf die Patenterteilung: **14.08.1996**
(21) Anmeldenummer: 92100320.8
(22) Anmeldetag: 10.01.1992
(51) Int. Cl.: B29C 47/24, B29C 47/28, B29C 47/86

(54) **Verfahren zur Herstellung von schlauchförmigen Hohlkörpern und Extrusionswerkzeug zur Durchführung des Verfahrens**
Method for making tubular hollow articles and extrusion tool for said method
Procédé de fabrication d'articles creux tubulaires et outil d'extrusion pour mettre en oeuvre ce procédé

(30) Priorität: 13.02.1991 DE 4104301
(43) Veröffentlichungstag der Anmeldung: 19.08.1992
(73) Patentinhaber: Meister, Werner Dipl.-Ing., D-22395 Hamburg (DE)
(72) Erfinder: Meister, Werner Dipl.-Ing., D-22395 Hamburg (DE)
(74) Vertreter: Niedmers, Ole, Dipl.-Phys.

(56) Entgegenhaltungen:
- EP-A- 0 096 179
- EP-A- 0 122 001
- DE-A- 1 753 839
- DE-A- 2 234 386
- DE-U- 8 601 139
- GB-A- 2 007 142
- US-A- 3 584 656

## Beschreibung

Die Erfindung betrifft ein Verfahren und ein Extrusionswerkzeug zur Herstellung von schlauchförmigen Hohlkörpern oder Ummantelungen aus vernetzbaren polymeren Werkstoffen.

Aus der EP-A-0 122 001 ist eine Vorrichtung zum Herstellen mehrschichtiger Polymerfolien bekannt, bei der der Dorn drehbar im Gehäuse gelagert ist. Die Rotation des Dornes hat dort die Aufgabe, Orientierungen quer zur Extrusionsrichtung zu erzeugen. Beim anschließenden Blocken des aufgeblasenen, ringförmigen extrudierten Körpers wird eine wenigstens zweischichtige Polymer-Folie erzeugt, die eine kreuzweise Ausrichtung der Makromoleküle aufweist. Dadurch soll eine erhöhte Festigkeit der Folie erzielt werden. Die mit der bekannten hergestellten Folien weisen eine Dicke von maximal 1 mm auf. Für die Erzeugung einer Orientierung der Makromoleküle in Umfangsrichtung wird dabei eine Rotationsgeschwindigkeit des Dornes von etwa 2 Umdrehungen pro Minute als ausreichend angesehen.

Aus der DE-A-17 53 839 ist eine Vorrichtung zum Herstellen von mehrschichtigen Kunststoffbahnen bekannt. Dazu weist diese Vorrichtung einen Verteilerblock mit umlaufenden Ringkanälen auf, in die zunächst die einzelnen Komponenten schichtweise gepreßt werden. Die einzelnen Schichten sind dabei radial und axial ausgerichtet. Im Bereich dieser Schichtbildung ist keine Relativbewegung zwischen Dorn und Gehäuse des Extrusionswerkzeugs vorgesehen. Vielmehr schließt sich an diesen Ringspalt ein weiterer Ringspalt an, dessen Begrenzungswände relativ zueinander bewegt werden können. Beim Anpressen des Kunststoffes wird durch die Rotation ein schlauchförmiger Kunststoffkörper hergestellt, der eine mehrschichtige Wandung aufweist, wobei die einzelnen Schichten spiralförmig verlaufen.

Aus der GB-A-2 007 142 ist eine Vorrichtung zum Herstellen schlauchförmiger Körper bekannt, die einen relativ zum Gehäuse drehbaren Dorn aufweist. Durch die Rotation soll eine gleichförmige axiale Verteilung des plastifizierten Kunststoffs und somit eine Vergleichmäßigung der Dicke des hergestellten Rohres oder Films bewirkt werden. Durch eine verbesserte axiale Geschwindigkeitsverteilung des plastifizierten Kunststoffmaterials soll erreicht werden, daß dieses mit geringerem Druck aus der Extrusionseinheit ausgepreßt werden kann. Dieses soll den Vorteil haben, daß die Zuführung mechanischer Energie, die gleichzeitig eine Erhöhung der Austrittstemperatur bewirkt, verringert wird.

Aus der EP-A-0 096 179 ist schließlich eine Vorrichtung zum Herstellen eines mehrschichtigen extrudierten Körpers bekannt. Um eine optimierte Herstellung des extrudierten Körpers auch mit solchen zu ermöglichen, die unterschiedliche Temperaturempfindlichkeiten aufweisen, wird bei der bekannten Vorrichtung vorgeschlagen, daß der Fließkanal für eine innere Schicht und der Fließkanal für eine äußere Schicht jeweils mit unterschiedlichen Temperierungsmitteln auf eine bestimmte Temperatur gebracht werden können. Dabei kann vorgesehen werden, daß der Fließkanal für die innere Schicht gekühlt wird und der Fließkanal für die äußere Schicht erhitzt wird.

Extrusionswerkzeuge dieser Art werden seit langem zur Formung von schlauchförmigen Hohlkörpern wie Rohren, Schläuchen, Ummantelungen von Stäben, elektrischen metallischen Leitungen oder auch beliebigen anderen Gebilden, beispielsweise Drahtgebilden eingesetzt. Immer dann, wenn beliebig lange Körper oder beliebig lange schlauchförmige Hohlkörper im Sinne der vorangehend aufgeführten Beispiele hergestellt werden sollen, ist ein derartiges Extrusionswerkzeug erforderlich. Dabei wird über den Einlaß unter voreingestelltem Druck und Temperatur befindlicher polymerer Werkstoff dem Extrusionswerkzeug zugeführt. Aufgrund der Druckdifferenz zwischen Einlaß und Austritt des polymeren Werkstoffes in das Extrusionswerkzeug erfolgt eine laminare Strömung des polymeren Werkstoffes in axialer Richtung, der dann durch eine geeignete, in der Form vorbestimmbare Extrusionsdüse austretend das Extrusionswerkzeug verläßt. Ein besonderes Problem bei derartigen Extrusionswerkzeugen ist, daß, beispielsweise zur Ummantelung eines Stabes oder dgl. oder auch zur Herstellung eines schlauchförmigen Hohlkörpers, der Strom des über den Einlaß in den Hohlraum zugeführten polymeren Werkstoffs sich über den Umfang des Stabes herum gleichmäßig verteilen muß.

Dieses geschieht bisher üblicherweise mit Hilfe von sogenannten Umlenkkurven, Wendelverteilern, Stauringen, Verteilerbohrungen oder dgl. Dabei entsteht bisher beim Zusammenfließen der geteilten Werkstoffstromkomponenten eine Nahtstelle, welche sich beim fertigen Produkt in nahezu allen Fällen als Schwächung des hergestellten Körpers darstellt.

Diese fertigungsbedingte Schwächung von mit bisher bekannten Extrusionswerkzeugen hergestellten schlauchförmigen Hohlkörpern ist sehr nachteilig, da diese Schwächung per se eine fertigungsbedingte Sollbruchstelle ist, die entscheidend die Lebensdauer der hergestellten Hohlkörper beeinflußt. Für viele Anwendungszwecke sind derartig hergestellte schlauchförmige Hohlkörper aus Sicherheitsgründen nicht geeignet.

Es ist Aufgabe der vorliegenden Erfindung, ein Verfahren und ein Extrusionswerkzeug der eingangs genannten Art zu schaffen, mit denen völlig nahtfreie, schlauchförmige Hohlkörper in weiten Bereichen beliebig vorwählbarer Dimension (äußeres Abmaß, Wandstärke) herstellbar sind, die einfach in der Verfahrensführung bzw. einfach im Aufbau sind und kostengünstig bereitstellbar sind, wobei mit dem Extrusionswerkzeug beliebige geeignete polymere Werkstoffe zur Herstellung der schlauchförmigen Hohlkörper verwendet werden können sollen.

Zur Lösung der Aufgabe ist das Verfahren zum Herstellen von schlauchförmigen Hohlkörpern und Ummantelungen aus vernetzbaren polymeren Werkstoffen mittels eines Extrusionswerkzeugs dadurch charakterisiert, daß es ein Gehäuse mit einem Einlaß für die Zufuhr des Werkstoffs, eine Extruderdüse, die über einen gehäuseinneren Hohlraum miteinander in Verbindung stehen, und einen im Hohlraum des Gehäuses um eine Achse rotierenden Dorn umfaßt, wobei die Drehgeschwindigkeit des Dornes so gewählt ist, daß die Vernetzungsreaktion bereits im Extrusionswerkzeug beginnt, und wobei zumindest das Gehäuse wenigstens im Bereich zwischen Einlaß und Extruderdüse temperiert ist.

Dadurch, daß das Gehäuse wenigstens im Bereich zwischen Einlaß und Extruder temperierbar ausgebildet ist, kann in Abhängigkeit vom geeignet ausgewählten polymeren Werkstoff für eine optimale Temperatur des Gehäuses gesorgt werden. Als Temperierungsmedium eignet sich grundsätzlich jedes beliebige geeignete flüssige oder gasförmige Mittel, das für einen optimalen Wärmetransport geeignet ist, beispielsweise Wasser, Öl oder Luft. Es ist aber auch denkbar, das Gehäuse des Extrusionswerkzeugs durch äußere Mittel von außen auf geeignete Weise zu temperieren, wobei grundsätzlich auch Luft oder elektrische Wärme- und Kältemittel in Frage kommen.

Der Vorteil der Erfindung liegt im wesentlichen darin, daß der über den Einlaß zugeführte polymere Werkstoff durch die Rotation des Dornes in seiner Umfangrichtung umgelenkt und auf dem Umfang gleichmäßig verteilt wird. Durch die fortwährende Rotationsbewegung des Dornes entsteht eine schraubenförmige Durchströmung des Hohlraumes, die darüber hinaus zu einer Vergleichmäßigung der Wandstärke des das Werkzeug über die Extruderdüse verlassenden Extrudats bzw. schlauchförmigen Hohlkörpers führt. Somit ist, anders als bei den bisher bekannten Extrusionswerkzeugen, eine Korrektur der Wandstärke des Extrudats, was bisher durch radiales Verschieben eines Mundstückes im Zusammenwirken mit der Extruderdüse notwendig war, in der Regel nicht mehr erforderlich.

Somit sind auch vorteilhafterweise die mit dem erfindungsgemäßen Extrusionswerkzeug erzielbaren Wanddickentoleranzen geringer als bei den bisher bekannten Werkzeugen bzw. Extrusionsverfahren.

Zur Lösung der Aufgabe ist das Extrusionswerkzeug zur Durchführung des Verfahrens nach Anspruch 1 dadurch charakterisiert, daß es ein Gehäuse mit einem Einlaß für die Zufuhr des vernetzbaren Werkstoffs umfaßt, eine Extruderdüse, die über einen gehäuseinneren Hohlraum mit dem Einlaß in Verbindung steht, und einen im Hohlraum des Gehäuses um eine Achse rotierenden Dorn, wobei Temperierungsmittel vorgesehen sind, die zumindest das Gehäuse wenigstens im Bereich zwischen Einlaß und Extruderdüse temperieren.

Gemäß einer vorteilhaften Ausgestaltung des Extrusionswerkzeugs ist eine Mehrzahl von Einlässen radial und/oder versetzt zueinander am Gehäuse angeordnet, so daß einerseits die Verteilung des über die Einlässe zugeführten polymeren Werkstoffs und damit ggf. die Vernetzung der einzelnen Werkstoffströme untereinander noch weiter verbessert wird und andererseits auch in Abhängigkeit von der Anzahl der Einlässe mehrschichtige schlauchförmige Hohlkörper in einem Arbeitsgang hergestellt werden können. Dieser Vorteil kann insbesondere bei der Herstellung von Kabelummantelungen genutzt werden, wie sie bei Hochspannungskabeln erforderlich sind. Bisher wurden diese üblicherweise in sogenannten Kettenlinien-Vulkanisationsanlagen extrudiert, wobei durch den Einfluß der Gravitation eine Deformation einer aufgebrachten Schicht beobachtet wurde, bis die Vernetzung des polymeren Werkstoffs tatsächlich eintrat, was insbesondere bei Hochspannungskabeln völlig unakzeptabel ist. Mit Hilfe der vorgenannten vorteilhaften Lösung lassen sich Mehrschichten-Werkstoffströme aus vernetzbaren Werkstoffen durch eine geeignet gewählte Erhöhung der Drehgeschwindigkeit des Dornes so weit erhitzen, daß die Vernetzungsreaktion bereits im Extrusionswerkzeug beginnt und somit das Extrudat stabilisiert.

Grundsätzlich kann der Hohlraum zwischen Gehäuse und Dorn vorteilhafterweise in Form eines Ringspaltes ausgebildet sein, wobei der Dorn dabei einen grundsätzlich beliebig geeigneten Querschnitt aufweisen kann. Vorteilhafterweise weist der Dorn jedoch einen im wesentlichen zylindrischen Querschnitt auf.

Zur Ausbildung mehrschichtiger schlauchförmiger Hohlkörper aber auch zur Verbesserung der Verteilung und ggf. auch zur Initiierung der Vernetzung des Werkstoffs kann, wie vorangehend ausgeführt, eine Mehrzahl von Einlässen am Gehäuse vorgesehen sein. Vorteilhaft ist es in diesem Zusammenhang, daß der Hohlraum in Richtung auf die Extruderdüse im Querschnitt sich stufenförmig radial erweiternd ausgebildet ist, wobei dabei vorzugsweise die stufenförmigen Erweiterungen im Bereich der Einlässe ausgebildet sind, so daß von den jeweiligen Auslässen her, auf einfache, auch bedingt durch die stufenförmigen Erweiterungen, die mehrschichtigen schlauchförmigen Hohlkörper hergestellt werden können. Aufgrund der sich im Hohlraum von dem jeweiligen Einlaß her ausbildenden laminaren Strömung der einzelnen Werkstoffschichten wird sich immer der zuletzt, d. h. der von den nachfolgenden Einlässen her in Richtung der Extruderdüse aufgebrachte Werkstoff als äußerste Schicht bzw. als Deckschicht des am fertigen schlauchförmigen Hohlkörper ausbilden.

Um die Verwendung flüssiger oder gasförmiger Temperierungsmittel zur Temperierung des Extrusionswerkzeugs zu ermöglichen, wird das Gehäuse vorteilhafterweise in einem gesonderten Hohlraum, der im Gehäuse ausgebildet ist, um den Dorn herum mittels Temperierungsmitteln temperiert, so daß auf einfache Weise gasförmige und flüssige Temperierungsmittel auf optimale Weise Verwendung finden können.

Bei einer anderen vorteilhaften Ausgestaltung der Erfindung ist der Dorn selbst temperierbar, so daß in Abhängigkeit vom gewählten polymeren Werkstoff zur Herstellung des schlauchförmigen Hohlkörpers, der Rotationsgeschwindigkeit des Dorns sowie der gewählten Wandstärke des herzustellenden Hohlkörpers und seiner äußeren Geometrie eine optimale Einstellung der Temperatur des Dorns möglich ist. Grundsätzlich kann der Dorn, genau wie das Gehäuse, durch beliebige geeignete Temperierungsmittel temperiert, d.h. gekühlt oder erwärmt werden, beispielsweise durch beliebige geeignete flüssige oder gasförmige Temperierungsmedium wie z.B. Öl Wasser oder Luft.

Vorzugsweise ist zu einer optimalen Temperierung des Dorns der Dorn selbst mit einem ringspaltförmig ausgebildeten Hohlraum zur Aufnahme des Temperierungsmediums versehen, der sich im wesentlichen parallel zu seiner Oberfläche erstreckt. Dadurch wird sichergestellt, daß die gesamte für den Extrusionsvorgang des polymeren Werkstoffs aktive Fläche auf optimale Weise mit dem Temperierungsmittel beaufschlagt werden kann und somit, wie angestrebt, eine gleichmäßige Temperierung der dafür nötigen Bereiche des Dorns erfolgt.

Dabei ist vorteilhafterweise der Hohlraum über wenigstens einen im Gehäuse ausgebildeten Temperierungsmitteleinlaß und wenigstens einen Temperierungsmittelauslaß mit von außen anlegbaren Mitteln für die Zufuhr und Abfuhr von Temperierungsmediums verbindbar. Grundsätzlich ist es möglich, den Temperierungsmitteleinlaß und den Temperierungsmittelauslaß so zu positionieren, daß diese mit entsprechenden, am Dorn an seiner Oberfläche ausgebildeten Ringkanälen zusammenwirken, die ihrerseits wieder mit dem im Dorn ausgebildeten Hohlraum zusammenwirken, so daß der Hohlraum auf geeignete Weise vom Temperierungsmitteleinlaß zum Temperierungsmittelauslaß mit Temperierungsmitteln durchflossen werden kann und somit auf hochgenaue Weise der gesamte aktive Bereich des Dorns mit Temperierungsmitteln beaufschlagt und somit auf der vorgewählten Temperatur konstant gehalten werden kann.

Die Erfindung wird nun unter Bezugnahme auf die nachfolgenden schematischen Zeichnungen anhand eines Ausführungsbeispieles im einzelnen beschrieben. Darin zeigen:
- Fig. 1: in der Seitenansicht im Schnitt das Extrusionswerkzeug,
- Fig. 2: einen Schnitt entlang der Linie A - B von Fig. 1,
- Fig. 3 a, b: einen Schnitt durch einen mehrschichtig aufgebauten schlauchförmigen Hohlkörper, der mit dem Extrusionswerkzeug gemäß den Fig. 1 und 2 hergestellt worden ist,
- Fig. 4a, b, c: die Geschindigkeitsvektoren des polymeren Werkstoffs im zwischen Gehäuse und Dorn gebildeten Hohlraum sowie die daraus resultierende Geschwindigkeit des polymeren Werkzeugs und
- Fig. 5a, b, c: die Geschwindigkeitsvektoren gemäß der Darstellung von Fig. 4a, b, c, jedoch bei einer höheren Umfangsgeschwindigkeit des Dornes.

Das Extrusionswerkzeug 10 besteht im wesentlichen aus einem Gehäuse 11, in dem ein im wesentlichen zylindrisch ausgebildeter Dorn 19 um eine Rotationsachse 18 drehbar angeordnet ist. Das Gehäuse 11 selbst ist im wesentlichen rotationssymmetrisch um die Rotationsachse 18 angeordnet, die ebenfalls die Gehäuseachse bildet. Am Gehäuse 11 ist eine Mehrzahl von Einlässen 12, 13, 14 für die Zufuhr von polymerem Werkstoff 15 angeordnet, wobei die unmittelbare Verbindung zu den Druckmitteln sowie dem Werkstoffvorrat hier aus Vereinfachungsgründen weggelassen sind, da diese allgemein bekannt sind.

An einem axialen Ende des Gehäuses 11 ist eine Extruderdüse 16 angeordnet, die im vorliegenden Fall eine ringförmige Extruderöffnung 160 aufweist. Die Extruderdüse 16 ist wahlweise entsprechend der gewünschten Geometrie des mit dem Extrusionswerkzeug 10 herzustellenden schlauchförmigen Hohlkörpers geformt und kann entsprechend in das axiale Ende des Gehäuses 11, beispielsweise über eine Gewindeverbindung, eingesetzt bzw. aus diesem entfernt werden. Auch dieses ist allgemeiner Stand der Technik, so daß an dieser Stelle nicht weiter darauf eingegangen zu werden braucht.

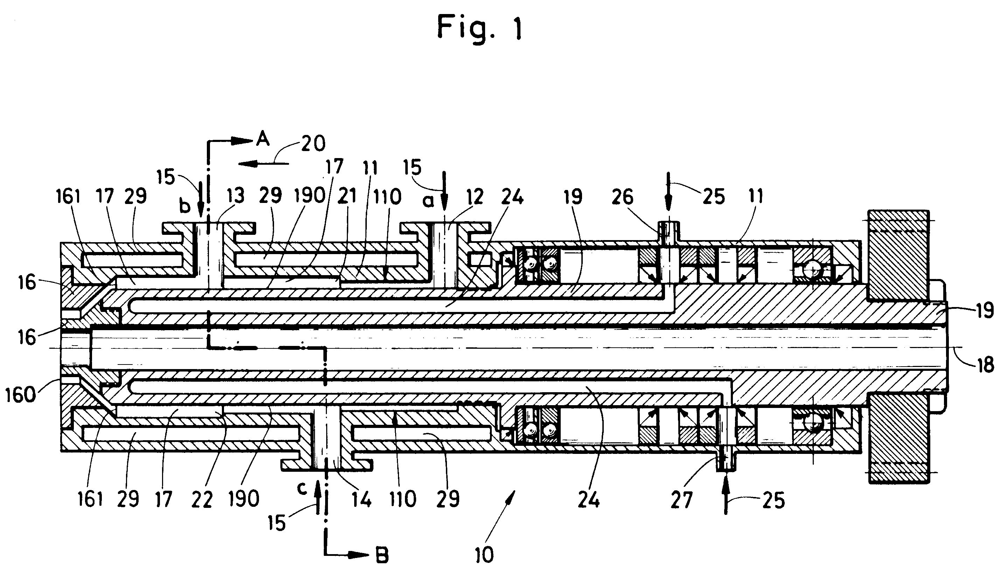

Zwischen der Innenfläche 110 des Gehäuses 11 und der äußeren Dornoberfläche 190 ist zwischen dem Bereich des Einlasses 12 bis in den Bereich der im Gehäuse 11 liegenden inneren Extruderöffnung 161 ein Hohlraum 17 ausgebildet, in den der polymere Werkstoff 15 über die Einlässe 12, 13, 14 gelangt und, druckbedingt, dann das Gehäuse an der Extruderöffnung 160 verläßt, was im einzelnen noch weiter unten beschrieben wird. Der Hohlraum 17 erweitert sich in Richtung des Pfeiles 20 auf die Extruderdüse 16 im Querschnitt stufenförmig und radial, vgl. Fig. 1. Die stufenförmigen Erweiterungen 21, 22 sind im Bereich der Einlässe 13, 14, d. h. in Richtung des Pfeiles 20 dem ersten Einlaß 12 nachfolgend ausgebildet.

Die in den Fig. dargestellte Ausführungsform des Extrusionswerkzeug 10 weist drei Einlässe 12, 13, 14 auf, die radial und/oder versetzt zueinander am Gehäuse angeordnet sind. Es sei darauf hingewiesen, daß die hier konkret ausgebildete Anzahl von Einlässen nur beispielhaft zu verstehen ist. Es sind, je nach Anwendungsfall und der Art der herzustellenden Hohlkörper und je nach Anzahl der herzustellenden Schichten, eine beliebige geeignete Anzahl von Einlässen für die Zufuhr von polymerem Werkstoff möglich.

Im Gehäuse 11 ist wenigstens im Bereich zwischen den Einlässen 12, 13, 14 und der Extrusionsdüse 16 ein Hohlraum 29 ausgebildet, der sich ringförmig um den Dorn 19 herum erstrecken kann. Der Hohlraum 29 ist über hier nicht dargestellte Einlässe mit einer Temperierungsmittelquelle bzw. mit einer Temperierungsmittelsenke verbunden, d. h. der Hohlraum 29 ist Teil eines Temperierungsmittelkreislaufes, der allgemein bekannt und deshalb hier im einzelnen nicht weiter beschrieben wird. Als Temperierungsmittel eignen sich alle beliebigen flüssigen und gasförmigen Medien, beispielsweise Wasser, Öl und Luft. Mit dem Temperierungsmittel wird eine vorgewählte Temperatur im Bereich des Hohlraumes 70 gehäuseseitig eingestellt.

Der um die Rotationsachse 18 hier über nicht dargestellte geeignete Antriebsmittel zur Ausführung einer Drehbewegung angetriebene Dorn 19 ist ebenfalls temperierbar. Zu diesem Zweck weist der Dorn 19 einen ringspaltförmig ausgebildeten Hohlraum 24 auf, der sich im wesentlichen parallel zur Oberfläche 190 des Dornes 19 erstreckt. Am Gehäuse 11 ist ein Temperierungsmitteleinlaß 26 und ein Temperierungsmittelauslaß 27 angeordnet, die jeweils über im Dorn 19 ausgebildete umlaufende Ringkanäle mit dem Hohlraum 24 in Verbindung stehen. Es sei darauf hingewiesen, daß die in Fig. 1 dargestellte Verbindung zwischen Hohlraum 24 und dem Temperierungsmitteleinlaß 26 sowie dem Temperierungsmittelauslaß 27 aus Vereinfachungsgründen nur schematisch dargestellt ist. Der Hohlraum 24 steht während der Rotationsbewegung des Dorns 19 fortwährend mit dem Temperierungmitteleinlaß 26 und dem Temperierungsmittelauslaß 27 in Verbindung. Auf diese Weise kann fortlaufend von außen angelegtes Temperierungsmittel von einer hier nicht dargestellten Temperierungsmittelquelle zugeführt und aus dem Temperierungsmittelauslaß einer hier nicht dargestellten Temperierungsmittelsenke abgeführt werden, wobei als Temperierungsmittel sich jedes beliebige geeignete flüssige oder gasförmige Medium, beispielsweise Wasser, Öl und Luft eignet. Durch das Temperierungsmittel, das somit im Hohlraum 24 des Dornes 11 fortwährend vorhanden ist, kann wenigstens der Bereich des Dornes 19 zwischen dem Einlaß 12 in Richtung des Pfeiles 20 bis zur Extrusionsdüse 16 auf einer vorwählbaren konstanten Temperatur gehalten werden.

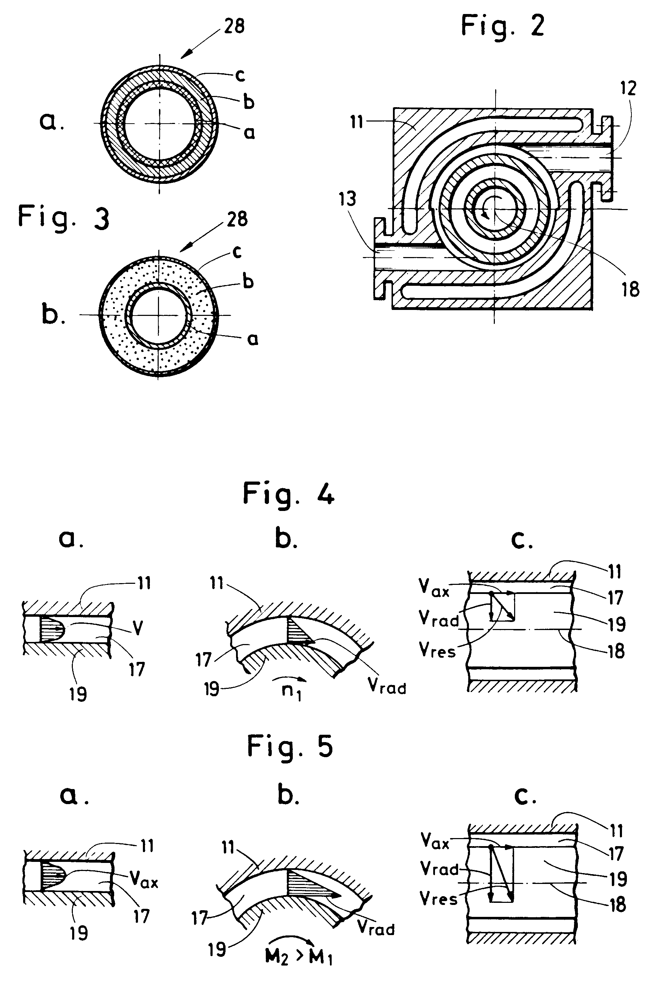

Der Dorn 19 ist im Gehäuse 11 über Lagermittel auf geeignete bekannte Weise gelagert, so daß hierauf nicht weiter eingegangen zu werden braucht. Das Extrusionswerkzeug arbeitet auf folgende Weise. Der Dorn 19 wird auf geeignete Weise mit einer vorbestimmten Rotationsgeschwindigkeit um die Rotationsachse angetrieben. Sowohl der Hohlkörper 29 im Gehäuse 11 als auch der Hohlraum 24 im Dorn werden über Temperierungsmittel 25 auf vorbestimmte Weise temperiert, so daß die Begrenzungen des Hohlraums 17 bzw. der Hohlraum 17 selbst eine vorbestimmte Temperatur aufweisen. Über den Einlaß 12 wird polymerer Werkstoff 15 zugeführt, der in den Hohlraum 17 eindringt. Der polymere Werkstoff 15 befindet sich unter geeignet eingestelltem Druck. Im Hohlraum 17 findet nun, bedingt durch die Rotationsbewegung des Dornes 19, eine Relativbewegung in Umfangsrichtung des Dornes 19 statt. Aufgrund der physikalischen Eigenschaften des wandhaftenden polymeren Werkstoffs, der aus geeigneten Gummi- oder Kunststoffmassen bestehen kann, erfolgt eine Übertragung von Schubspannungen in Richtung der Drehbewegung des Dornes bzw. des Gehäuses, vgl. die Fig. 4 und 5. Der Werkstoff erfährt somit im Hohlraum 17 neben einem axialen Geschwindigkeitsvektor aufgrund der Druckströmung entlang des Hohlraums 17 noch eine überlagernde Komponente in Umfangsrichtung, welche abhängig von der Relativbewegung des Dornes 19 ist. In den Fig. 4 und 5 sind die Geschwindigkeitsvektoren in axialer und radialer Richtung Vₐₓ und V_{rad} dargestellt, und zwar für verschiedene Rotationsgeschwindigkeiten des Dornes 19. Die daraus resultierenden Geschwindigkeiten Vᵣₑₛ des polymeren Werkstoffs sind in den Fig. 4 c und 5 c qualitativ dargestellt. Es entsteht somit eine schraubenförmige Durchströmung des Hohlraumes 17, welcher auch zu einer Vergleichmäßigung der Wandstärke des mit dem Extrusionswerkzeug 10 hergestellten schlauchförmigen Hohlkörpers führt. Die während des Extrusionsprozesses bzw. Drehprozesses entstehende Reibungswärme wird durch das Temperierungsmittel im Hohlraum 24 des Dornes 19 und im Hohlraum 29 des Gehäuses 11 abgeführt.

Mittels der in Fig. 1 dargestellten Ausgestaltung des Extrusionswerkzeuges 10, das mit drei Einlässen 12, 13, 14 versehen ist, ist es möglich, mehrschichtige schlauchförmige Hohlkörper, wie sie in den Fig. 3a, b dargestellt sind, herzustellen. Werden neben dem Einlaß 12, die Einlässe 13 und 14 jeweils mit unterschiedlichen polymeren Werkstoffen beschickt, ist es möglich, mit Hilfe der bei der Rotationsbewegung entstehenden Schubspannungen in der entstehenden wendelförmigen, laminaren Strömung des ersten vom Einlaß 12 zugeführten Werkstoffs a noch zusätzliche Werkstoffe wie b und c, die von den Einlässen 13 und 14 zugeführt werden, zu transportieren, und über den Umfang gleichmäßig zu verteilen. Aufgrund der sich im Hohlraum 17 ausbildenden laminaren Strömung wird immer die zuletzt in Fließrichtung aufgebrachte Masse als äußere (Deck-)schicht am fertigen schlauchförmigen Hohlkörper erscheinen. Die Zuführung der unterschiedlichen Werkstoffe bzw. Werkstoffströme a, b, c usw. erfolgt tangential in Umfangsrichtung in den Hohlraum 17, wobei der Hohlraum 17, wie oben erläutert, für jede zusätzliche Masse sich stufenförmig radial erweitert, und zwar um einen Betrag, der auf vorbestimmte Weise geeignet festgelegt wird.

Im Vorangehenden wurde bezüglich des dem Extrusionswerkzeug zu den Einlässen 12, 13, 14 zugeführten Werkstoffs immer von polymerem Werkstoff 15 gesprochen. Polymerer Werkstoff 15 im vorbeschriebenen Sinne kann aber auch eine beliebige geeignete Werkstoffkomponente sein, die als Zwischenschicht oder Grundschicht oder Deckschicht oder farbige Kennzeichnung bei einem gemäß dem Extrusionswerkzeug 10 herzustellenden schlauchförmigen Körper Verwendung finden kann. Der Vorteil des hier beschriebenen Extrusionswerkzeug liegt im wesentlichen in der Erzielung einer gleichmäßigen Schichtstärke beim fertigen Hohlkörper ohne jegliche Kernstegmarkierungen auf dem Umfang. Durch die radiale Geschwindigkeiteskomponente V_{rad} erhält man eine zusätzliche Orientierung der Makromoleküle in Umfangsrichtung, welche die mechanische Festigkeit des mit dem Extrusionswerkzeug 10 hergestellten Produkts erhöht und Lunkerbildung vermeidet. Durch reproduzierbare Rotationsgeschwindigkeiten des Dorns 19 sowie der genau einstellbaren Temperaturverhältnisse sowie durch eine konstante Zuführung des polymeren Werkstoffs 15 zu den einzelnen Einlässen 12, 13, 14 erhält man eine stets gleichbleibende Qualität des Endprodukts, so daß auch aufwendige Schichtdickenmessungen, wie es bei im Stand der Technik bekannten Extrusionswerkzeugen nötig war, während des Herstellungsvorganges ersatzlos entfallen können.

Es sei noch erwähnt, daß bei grundsätzlich gleichem Aufbau des Extrusionswerkzeugs 10 im vorangehend beschriebenen Sinne das Werkzeug auch derart funktionieren kann, daß der Dorn 19 feststeht und das Gehäuse 11, geeignet angetrieben, um die Achse 18 rotiert.

### Bezugszeichenliste

- 10: Extrusionswerkzeug
- 11: Gehäuse
- 110: Innenfläche
- 12: Einlaß
- 13: Einlaß
- 14: Einlaß
- 15: polymerer Werkstoff
- 16: Extruderdüse
- 160: Extruderöffnung
- 161: Extruderöffnung
- 17: Hohlraum
- 18: Rotationsachse
- 19: Dorn
- 190: Dornoberfläche
- 20: Dichtung
- 21: Erweiterung
- 22: Erweiterung
- 23: Erweiterung
- 24: Hohlraum (Dorn)
- 25: Temperierungsmittel
- 26: Temperierungsmitteleinlaß
- 27: Temperierungsmittelauslaß
- 28: Hohlkörper
- 29: Hohlraum (Gehäuse)

## Patentansprüche

1. Verfahren zum Herstellen von schlauchförmigen Hohlkörpern oder Ummantelungen aus vernetzbaren polymeren Werkstoffen (15) mittels eines Extrusionswerkzeugs (10), umfassend ein Gehäuse (11) mit einem Einlaß für die Zufuhr des polymeren Werkstoffs (15), eine Extruderdüse (16), die über einen gehäuseinneren Hohlraum (17) miteinander in Verbindung stehen und einen im Hohlraum (17) des Gehäuses (11) um eine Achse (18) rotierenden Dorn (19), wobei die Drehgeschwindigkeit des Dorns (19) so gewählt ist, daß die Vernetzungsreaktion bereits im Extrusionswerkzeug (10) beginnt, und wobei zumindest das Gehäuse (11) wenigstens im Bereich zwischen Einlaß (12; 13; 14) und Extruderdüse (16) temperiert ist.

2. Extrusionswerkzeug (10) zur Durchführung des Verfahrens nach Anspruch 1, umfassend ein Gehäuse (11) mit einem Einlaß (12; 13; 14) für die Zufuhr des vernetzbaren polymeren Werkstoffs (15), eine Extruderdüse (16), die über einen gehäuseinneren Hohlraum (17) mit dem Einlaß (12; 13; 14) in Verbindung steht, und einem im Hohlraum (17) des Gehäuses (11) um eine Achse (18) rotierenden Dorn (19), wobei Temperierungsmittel (25) vorgesehen sind, die zumindest das Gehäuse (11) wenigstens im Bereich zwischen Einlaß (12; 13; 14) und Extruderdüse (16) temperieren.

3. Extrusionswerkzeug nach Anspruch 2, dadurch gekennzeichnet, daß eine Mehrzahl von Einlässen (12; 13; 14) radial und/oder versetzt zueinander am Gehäuse (11) angeordnet sind.

4. Extrusionswerkzeug nach einem oder beiden der Ansprüche 2 oder 3, dadurch gekennzeichnet, daß der Hohlraum (17) zwischen Gehäuse (11) und Dorn (19) in Form eines Ringspaltes ausgebildet ist, wobei der Dorn (19) einen im wesentlichen zylindrischen Querschnitt aufweist.

5. Extrusionswerkzeug nach einem oder mehreren der Ansprüche 2 bis 4, dadurch gekennzeichnet, daß der Hohlraum (17) sich in Richtung (20) auf die Extruderdüse (16) im Querschnitt stufenförmig radial erweiternd ausgebildet ist.

6. Extrusionswerkzeug nach Anspruch 5, dadurch gekennzeichnet, daß die stufenförmigen Erweiterungen (21; 22; 23) im Bereich der Einlässe (12; 13; 14) ausgebildet sind.

7. Extrusionswerkzeug einem oder mehreren der Ansprüche 2 bis 6, dadurch gekennzeichnet, daß die Temperierungsmittel im Gehäuse (11) im wesentlichen ringförmig um den Dorn (19) herum angeordnet sind.

8. Extrusionswerkzeug nach einem oder mehreren der Ansprüche 2 bis 7, dadurch gekennzeichnet, daß die Temperierungsmittel auch den Dorn (19) temperieren.

9. Extrusionswerkzeug nach Anspruch 8, dadurch gekennzeichnet, daß der Dorn (19) einen ringspaltförmig ausgebildeten Hohlraum (24) zur Aufnahme eines Temperierungsmediums (25) aufweist, der sich im wesentlichen parallel zu seiner Oberfläche (190) erstreckt.

10. Extrusionswerkzeug nach Anspruch 9, dadurch gekennzeichnet, daß der im Dorn (19) vorgesehene Hohlraum (24) über wenigstens einen im Gehäuse (11) ausgebildeten Temperierungsmitteleinlaß (26) und einen Temperierungsmittelauslaß (27) mit von außen anlegbaren Mitteln für die Zufuhr und Abfuhr von Temperierungsmedium verbindbar ist.

## Claims

1. Process for producing hollow tubular bodies or envelopes from cross-linking polymeric materials (15), by means of an extrusion device (10) comprising a housing (11) with an intake for the introduction of the polymeric material (15) and an extruder die (16) connected with one another via a hollow space (17) within the housing, as well as a mandrel (19) rotating about an axis (18) in the hollow space (17) in the housing (11), the speed of rotation of the mandrel (19) being selected to be such that the cross-linking reaction already starts in the extrusion device (10), and at least the housing (11) in the area between the intake (12; 13; 14) and the extruder die (16) being warmed to the right temperature.

2. An extrusion device (10) for carrying out the process in accordance with Claim 1, comprising a housing (11) with an intake (12; 13; 14) for the introduction of the cross-linking polymeric material (15), an extruder die (16) connected via a hollow space (17) with the intake (12; 13; 14), and a mandrel (19) rotating about an axis (18) in the hollow space (17) in the housing (11), a medium (25) for applying moderate heat being provided which warms at least the housing (11) in the area between the intake (12; 13; 14) and the extruder die (16) to the right temperature.

3. Extrusion device in accordance with Claim 2, characterized in that a number of intakes (12; 13; 14) are disposed radially and/or in a staggered relationship to one another in the housing (11).

4. Extrusion device in accordance with one or both of Claims 2 and 3, characterized in that the hollow space (17) between the housing (11) and the mandrel (19) is given the form of a circular slit, the mandrel (19) having a substantially cylindrical cross-section.

5. Extrusion device in accordance with one or more of Claims 2 to 4, characterized in that the hollow space (17) is given a cross-section which increases radially and in steps in the direction (20) of the extruder die (16).

6. Extrusion device in accordance with Claim 5, characterized in that the stepped increases in size (21; 22; 23) are formed in the area of the intakes (12; 13; 14).

7. Extrusion device in accordance with one or more of Claims 2 to 6, characterized in that the temperature regulating means in the housing (11) are disposed substantially in a ring around the mandrel (19).

8. Extrusion device in accordance with one or more of Claims 2 to 7, characterized in that the means for applying moderate heat also warm the mandrel (19) to the right temperature.

9. Extrusion device in accordance with Claim 8, characterized in that the mandrel (19) has a hollow space (24), shaped in the form of a circular slit, for receiving a medium (25) for applying moderate heat, and extending substantially parallel to its surface (190).

10. Extrusion device in accordance with Claim 9, characterized in that the hollow space (24) provided within the mandrel (19) can be connected with externally fitted means for the supply and discharge of a medium for applying moderate heat, via at least one intake (26) and one outlet (27) for the heating medium formed in the housing (11).

## Revendications

1. Procédé pour fabriquer des corps creux ou des enveloppes en forme de tubes, réalisés en des matériaux polymères réticulables (15), à l'aide d'un outil d'extrusion (10), comprenant un boîtier (11) possédant une entrée pour l'introduction du matériau polymère (15) et une buse d'extrusion (16), qui sont reliées entre elles par l'intermédiaire d'une cavité (17) située à l'intérieur du boîtier, et un mandrin (19) qui tourne autour d'un axe (18) dans la cavité (17) du boitier (11), la vitesse de rotation du mandrin (19) étant choisie de manière que la réaction de réticulation commence déjà dans l'outil d'extrusion (10), et au moins le boitier (11) étant mis en température au moins dans la zone située entre l'entrée (12;13;14) et la buse d'extrusion (16).

2. Outil d'extrusion (10) pour la mise en oeuvre du procédé selon la revendication 1, comprenant un boîtier (11) possédant une entrée (12;13;14) pour l'envoi du matériau polymère réticulable (15), une buse d'extrusion (16), qui est reliée à l'entrée (12;13;14) par l'intermédiaire d'une cavité (17) située à l'intérieur du boitier, et un mandrin (19) qui tourne autour d'un axe (18) dans la cavité (17) du boitier (11), des moyens de mise en température (25) étant prévus pour mettre en température au moins le boîtier (11) au moins dans la zone située entre l'entrée (12;13;14) et la buse d'extrusion (16).

3. Outil d'extrusion selon la revendication 2, caractérisé en ce qu'une multiplicité d'entrées (12;13;14) sont disposées radialement et/ou en étant décalées les unes par rapport aux autres dans le boitier (11).

4. Outil d'extrusion selon l'une des deux ou les deux revendications 2 ou 3, caractérisé en ce que la cavité (17) est agencée, entre le boitier (11) et le mandrin (19), sous la forme d'une fente annulaire, le mandrin (19) possédant une section transversale essentiellement cylindrique.

5. Outil d'extrusion selon une ou plusieurs des revendications 2 à 4, caractérisé en ce que la cavité (17) est agencée de sorte que sa section transversale s'élargit radialement d'une manière étagée, en direction (20) de la buse d'extrusion (16).

6. Outil d'extrusion selon la revendication 5, caractérisé en ce que les parties élargies de forme étagée (21;22;23) sont formées dans la zone des entrées (12; 13;14).

7. Outil d'extrusion selon une ou plusieurs des revendications 2 à 6, caractérisé en ce que les moyens de mise en température sont disposés dans le boitier (11) essentiellement selon une disposition annulaire autour du mandrin (19).

8. Outil d'extrusion selon une ou plusieurs des revendications 2 à 7, caractérisé en ce que les moyens de mise en température mettent en température également le mandrin (19).

9. Outil d'extrusion selon la revendication 8, caractérisé en ce que le mandrin (19) possède une cavité (24) agencée en forme de fente annulaire, servant à recevoir un fluide de mise en température (25) et qui s'étend essentiellement parallèlement à sa surface (190).

10. Outil d'extrusion selon la revendication 9, caractérisé en ce que la cavité (24) prévue dans le mandrin (19) peut être reliée par l'intermédiaire d'au moins une entrée (26) du fluide de mise en température, formée dans le boîtier (11), et d'une sortie (27) du fluide de mise en température, à des moyens pouvant être appliqués de l'extérieur et servant à amener et à évacuer le fluide de mise en température.
